# EUROPÄISCHE PATENTANMELDUNG

(11) **EP 4 462 149 A1**
(43) Veröffentlichungstag der Anmeldung: **13.11.2024**
(21) Anmeldenummer: 24158006.7
(22) Anmeldetag: 16.02.2024
(51) Int. Cl.: G01S 5/02

(54) **POSITIONSBESTIMMUNG DURCH ENTFERNUNGSBESTIMMUNG IM SPEKTRUM**

(30) Priorität: 12.05.2023 EP 23172984
(71) Anmelder: Lambda: 4 Entwicklungen GmbH, 22299 Hamburg (DE)
(72) Erfinder: Reimann, Rönne, 22769 Hamburg (DE)
(74) Vertreter: Raffay & Fleck

(57) **Zusammenfassung**

Die Erfindung betrifft eine Positionsbestimmung eines in einem Raum angeordneten Objekts durch Auswertung des von dem Objekt gesendeten und/oder empfangenen Funksignals in Umgebungen mit Multipathing. Die Aufgabe wird dadurch gelöst, dass aus dem empfangenen Funksignal unter Nutzung mindestens einer Phasenmessung Signalanteile mindestens zweier Signalpfade unterschiedlicher Signalpfadlänge des empfangenen Funksignals ermittelt werden und als eine oder mehrere mögliche Position(en) des ersten Objekts (O1) mindestens eine mögliche Ausgangsposition des Funksignals bestimmt wird, wobei die mindestens eine mögliche Ausgangsposition so bestimmt wird, dass ein von der mindestens einen möglichen Ausgangsposition ausgesendetes hypothetisches Funksignal zum zweiten Objekt (O2) über Signalpfade propagieren kann, deren Signalpfadlängen mit denen der mindestens zwei Signalpfade korrelieren.

## Beschreibung

Die Erfindung betrifft eine Positionsbestimmung eines in einem Raum angeordneten Objekts durch Auswertung des von dem Objekt gesendeten und/oder empfangenen Funksignals.

Es ist bekannt eine Position eines Objekts durch Bestimmung mehrere Entfernungen des Objekts zu mehreren Bezugspunkten zu bestimmen.

Insbesondere bei Funksignalen versendenden Objekten ist es bekannt, die Laufzeit des Signals zu unterschiedlichen Empfängern zu bestimmen, um hieraus eine Position des Objekts in Relation zu den Empfängern zu bestimmen. Hierfür wird für jeden Empfänger die möglichen Positionen als Lagenschar (Menge möglicher Positionen) bestimmt und der Schnittpunkt der Lagenscharen der Empfänger als Position des Objekts angenommen.

Ein Nachteil der vorgenannten Lösungen ist, dass die Position der Empfänger, zumindest relativ unter- und zueinander bekannt sein muss, um die Position des Senders zu bestimmen auch wirkt sich Mulitpathing meist negativ auf die bekannten Verfahren aus, so dass vielfach versucht wird, Multipathing zu vermeiden oder Fehler durch Multipathing in der Positionsbestimmung mathematisch zu vermeiden. Derartige Vorgehensweisen sind beispielsweise bekannt aus der WO2015102713A2, US10459065B2, WO2012066541A2, WO2009047546A1, EP2778710A2 sowie der US2016277893A1.

Zudem ist es aus der CN113532437A bekannt, mittels UWB Signalen drei Multiphathpfadlaufzeiten zu bestimmen. Diese drei Laufzeiten in drei Entfernung umzurechnen, Kreise mit den Radien der Entfernungen zu zeichnen und den Schnittpunkt der Kreise als Position anzunehmen. Dieses Vorgehen ist mit zahlreichen Nachteilen behaftet: So bedarf UWB großer Leistungen, bringt eine starke Störung mit sich, ist die Bestimmung der Laufzeiten anspruchsvoll und kann mit dem Ansatz der Schnittpunkte der drei Kreise nur in wenigen Situationen überhaupt eine Position, geschwiege denn die korrekte bestimmt werden, insbesondere in Umfeldern mit mehreren reflektierenden Flächen, ist dies in der Regel nicht möglich.

Weiter ist aus der US201 5247916A1 aus einem anderen Gebiet der Technik eine Lösung bekannt, die Laufzeiten von Ultraschall über unterschiedliche Signalpfade, um eine Position eines Reflektors zu bestimmen.

Die durch die Erfindung zu lösende Aufgabe besteht somit darin, die Positionsbestimmung eines ein funksignalsendenden und/oder empfangenen Objekts einfacher, schneller und zuverlässiger zu gestalten, insbesondere in Umgebungen mit starkem Multipathing. Dabei muss nicht zwingend eine einzige Position bestimmt werden, es kann auch ausreichen, wenn mehrere mögliche Positionen bestimmt werden.

Die Aufgabe wird durch ein wie nachfolgend beschriebenes Verfahren, insbesondere einem Verfahren nach Anspruch 1, gelöst. Weitere Lösungen insbesondere vorteilhafte Ausbildungen der vorgenannten Lösungen sind in den weiteren Ansprüchen sowie in der nun folgenden Beschreibung dargestellt.

Das erfindungsgemäße Verfahren umfasst ein Verfahren zur Bestimmung einer Position mindestens eines ersten Objekts.

Erfindungsgemäß ist das mindestens eine erste Objekt eingerichtet und insbesondere konfiguriert, mindestens ein Funksignal zu versenden. Alternativ oder zusätzlich kann das mindestens eine erste Objekt eingerichtet und insbesondere konfiguriert sein, mindestens ein Funksignal zu empfangen, insbesondere ein Empfänger oder ein Transceiver sein.

Dabei kann das mindestens eine Funksignal insbesondere mindestens eine Frequenz, insbesondere mindestens zwei, vorteilhafter 4 oder mehr Frequenzen, beinhalten.

Das mindestens eine Funksignal weist vorteilhafterweise zu jeder Zeit maximal eine Bandbreite von 50 MHz, insbesondere maximal 25 MHz, auf. Insbesondere kann es sich bei dem Funksignal um ein schmalbandiges und/oder kein Ultrabreitband (UWB) Funksignal handeln

Erfindungsgemäß ist in dem Verfahren mindestens ein zweites Objekt eingerichtet, insbesondere konfiguriert, mindestens ein von dem ersten Objekt gesendetes Funksignal zu empfangen. Insbesondere ist das mindestens eine zweite Objekt ein Empfänger oder ein Transceiver. Alternativ, nämlich insbesondere dann, wenn das mindestens eine erste Objekt eingerichtet und insbesondere konfiguriert ist, mindestens ein Funksignal zu empfangen, ist das mindestens eine zweite Objekt (auch) eingerichtet, insbesondere konfiguriert mindestens ein Funksignal zu versenden.

Dabei kann das mindestens eine Funksignal insbesondere mindestens eine Frequenz, insbesondere mindestens zwei, vorteilhafterweise vier oder mehr Frequenzen, beinhalten.

Das mindestens eine Funksignal weist vorteilhafterweise zu jeder Zeit maximal eine Bandbreite von 50 MhH, insbesondere maximal 25 MHz, auf. Insbesondere kann es sich bei dem Funksignal um ein schmalbandiges und/oder kein Ultrabreitband (UWB) Funksignal handeln.

Mit Vorteil kann sowohl das mindestens eine erste Objekt und das mindestens eine zweite Objekt eingerichtet und insbesondere konfiguriert sein, mindestens ein Funksignal zu versenden und mindestens eine Funksignal zu empfangen. Insbesondere kann das mindestens eine erste Objekt und das mindestens eine zweite Objekt je ein Transceiver sein. Hinsichtlich des Funksignals gilt insbesondere obiges. Das Verfahren kann also wahlweise in ein der beiden Richtungen oder gleichzeitig oder nacheinander in beide der Richtungen zwischen erstem und zweitem Objekt durchgeführt werden. Dabei können auch mehrere erst und/oder zweite Objekte verwendet werden. So kann die Position des aktiven oder passiven Objekts bestimmt werden. Die Objekte können auch nacheinander oder gleichzeitig, sowohl die passive als auch die aktive Rolle ausführen.

Das an einem der Objekte empfangene Funksignal, das seinen Ursprung vom anderen der Objekte hat, das das Funksignal ursprünglich versendet hat, wird im Folgenden empfangenes Signal genannt. So kann beispielsweise das andere der Objekte eines der mindestens einen ersten Objekte und das empfangende Objekt eines der mindestens einen zweiten Objekte sein. Möglich ist jedoch auch, die umgekehrte Konstellation. Dabei kann es insbesondere vorstellbar sein, dass das an einem der Objekte empfangene Signal nicht vollständig mit dem von dem anderen Objekt gesendeten Funksignal übereinstimmt. Ein derartiges Phänomen ist bekannt, unter anderem aus Multipathing-Effekten.

Beispielsweise können ein erstes von dem ersten Objekt ausgesendetes Signal und ein weiteres später gesendetes, aber ansonsten identisches Signal je nach zurückgelegtem Pfad des jeweiligen Signals überlappend am Empfänger ankommen und empfangen werden. Dabei kann beispielsweise das weitere Signal (teilweise) direkt vom ersten Objekt zum Empfänger übermittelt worden sein (Line of Sight (LOS) Signal), wohingegen das erste Signal (teilweise) reflektiert worden sein kann, wodurch sich die Laufzeit und somit die Länge des Pfades des Signalanteils verlängert.

Mit Vorteil, kann/können das mindestens eine erste Objekt und/oder der mindestens eine zweite Objekt sich insbesondere in einem Bezugsystem befinden, insbesondere darin angeordnet sein. Insbesondere kann/können es/sie innerhalb des Bezugssystems angeordnet sein. Möglich kann es jedoch ebenso sein, dass das mindestens eine erste Objekt oder zumindest eines des mindestens einen ersten, am Verfahren beteiligten Objekte nicht in dem Bezugssystem angeordnet ist. Möglich ist es ebenso, dass das mindestens eine zweite Objekt, insbesondere der mindestens eine Empfänger, oder zumindest eines der am Verfahren beteiligten zweiten Objekte nicht in dem Bezugssystem angeordnet ist.

Mit Vorteil bewegt sich das mindestens eine Funksignal ausgehend von dem das Funksignal aussendenden Objekt, beispielsweise dem ersten Objekt, hin zu dem das vom dem Objekt ausgesendete Funksignal empfangenden Objekt, bspw. dem zweiten Objekt, zumindest zeitweilig und/oder abschnittsweise durch das Bezugssystem. Mit Vorteil kann es sich bei dem vorgenannten und nachgenannten Bezugssystem um einen Raum, insbesondere einen Innenraum, handeln.

Erfindungsgemäß ist in dem Verfahren die Lage von mindestens einer, insbesondere mindestens zwei, Reflexionsfläche(n) bekannt. Dabei ist/sind die Reflexionsfläche(n) insbesondere eingerichtet und insbesondere konfiguriert, zumindest das Funksignal zu reflektieren. Insbesondere ist durch eine Reflektion des Funksignals an der Reflexionsfläche der Signalpfad vom Sender zum Empfänger dieses Funksignalteils gegenüber dem direkten Signalpfad vom Sender zum Empfänger verlängert.

Mit Vorteil kann die Lage von der mindestens einen Reflexionsfläche in Bezug auf ein Bezugssystem, insbesondere das oben genannten Bezugssystem, bekannt sein.

Erfindungsgemäß ist in dem Verfahren entweder die Lage des mindestens einen ersten Objekts oder die Lage des mindestens einen zweiten Objekts bekannt, während insbesondere die Position des anderen bestimmt werden soll.

Mit Vorteil kann entweder die Lage von dem mindestens einen ersten Objekt oder die Lage von dem mindestens einen zweiten Objekt in Bezug auf ein Bezugssystem, insbesondere das oben genannten Bezugssystem, bekannt sein.

Erfindungsgemäß ist somit zumindest die Lage mindestens einer Reflexionsfläche und zudem entweder die Lage des mindestens einen ersten Objekts oder die Lage des mindestens einen zweiten Objekts, zumindest relativ zueinander, bekannt.

Dabei kann hinsichtlich der Kenntnis der Lage im Zusammenhang mit der gesamten Offenbarung der Erfindung vorzugsweise zumindest die relative Lage der mindestens einen Reflexionsfläche entweder zu dem mindestens einen ersten Objekt oder zu dem mindestens einen zweiten Objekt zu verstehen sein. Beispielsweise ist die relative Lage einer ersten Reflexionsfläche in Bezug zu einem zweiten Objekt bekannt. Ferner kann beispielsweise eine relative Lage einer zweiten Reflexionsfläche zu der ersten Reflexionsfläche bekannt sein, und somit auch die relative Lage dieser zweiten Reflexionsfläche zu dem ersten oder zweiten Objekt. Sofern lediglich die relative Lage bekannt ist, ist selbstredend auch nur die relative Position des ersten oder zweiten Objekts zu dem Bezugspunkt des relativen Lagesystem ermittelbar, gleichwohl erfindungsgemäß. Es kann aber hinsichtlich der Kenntnis der Lage im Zusammenhang mit der gesamten Offenbarung der Erfindung auch die absolute Lage mindestens eines ersten Elements aus den Elementen aus einerseits Reflexionsfläche und anderseits erstes oder zweites Objekt und die relative Lage der weiteren Elemente aus einerseits Reflexionsfläche und anderseits erstes oder zweites Objekt zu dem ersten Element zu verstehen sein.

In dem erfindungsgemäßen Verfahren werden Signalanteile aus dem empfangenen Signal ermittelt. Die Signalanteile werden dabei insbesondere mindestens einem Signalpfad zugeordnet. Eine derartige Ermittlung von Signalanteilen ist dem Grunde nach bekannt, beispielsweise um nur bestimmte Signalanteile bei der weiteren Analyse zu berücksichtigen. Auch ist es bekannt, auf unterschiedlichen Frequenzen mögliche Signalpfadlängen zu ermitteln und darauf basieren eine Entfernung zu bestimmen, beispielsweise um durch die Nutzung unterschiedlicher Frequenzen 2-Pi-bedingte Mehrdeutigkeiten auszuschließen

Das erfindungsgemäß Verfahren ist nun dadurch gekennzeichnet, dass die Signalanteile von mindestens zwei Signalpfaden mit unterschiedlicher Signalpfadlänge vom Sender zum Empfänger ermittelt werden. Dabei sind die mindestens zwei unterschiedlichen Signalanteile und/oder Signalpfadlängen eines an einem Empfänger von einem Sender empfangenen Funksignals insbesondere solches eines Funksignals, das von einem Sender gesendet wurde. Dies schließt insbesondere nicht aus, dass dies auf mehreren Frequenzen und/oder Frequenzdifferenzen und/oder Frequenzpaaren jeweils durchgeführt wird und/oder für die unterschiedliche Frequenzen, Frequenzpaare und/oder Frequenzdifferenzen Signalanteile für unterschiedliche Signalpfade ermittelt werden, gleichwohl unterscheidet sich das erfindungsgemäß Verfahren unter anderem dadurch von bekannten Verfahren, nämlich dass zumindest für eine (einzige) Frequenz und/oder ein einziges Frequenzpaar und/oder eine einzige Frequenzdifferenz die Signalanteile mindestens zweier Signalpfade vom Sender zum Empfänger ermittelt werden.

Die Ermittlung erfolgt dabei unter Nutzung von Phasenmessungen an dem mindestens einen Funksignal. Dazu sind zahlreichen Methoden bekannt. So kann beispielsweise ein komplexer Messwert aus empfangener Amplitude oder Energie und Phase gebildet werden. Daraus lassen sich, insbesondere bei Nutzung mehrerer Antennenpfade und/oder Frequenzen und/oder Frequenzdifferenzen Vektoren oder Matrizen bilden, die insbesondere mit sich autokorreliert werden können. Mit den entstandenen komplexen Matrizen lassen sich dann Signalanteile ermitteln. Dabei können für die Phasenmessungen auch die Änderungen der Phase zwischen zwei Messungen auf unterschiedlichen Frequenzen verwendet werden. Dies wird bevorzugt, da sich hierdurch sich Probleme bzgl. Phasensprüngen bei der Reflexion vermeiden lassen und niedrigere Anforderungen an die Messhardware gestellt werden und/oder Zeitsynchronisation gestellt werden. Als Amplitude oder Energie kann dann beispielsweise eine Mittelung verwendet werden. Auch kann beispielsweise eine Fouriertransformation oder FFT verwendet werden, um die Signalanteile und/oder Signalpfadlängen zu bestimmen.

Erfindungsgemäß wird als eine oder mehrere mögliche Position(en) des ersten Objekts mindestens eine mögliche Ausgangsposition des Funksignals bestimmt, wobei die mindestens eine mögliche Ausgangsposition so bestimmt wird, dass ein von der mindestens einen möglichen Ausgangsposition hypothetisch ausgesendetes Funksignal zum zweiten Objekt über Signalpfade propagieren kann, deren Signalpfadlängen mit denen der mindestens zwei ermittelten Signalpfade korrelieren. Unter dem hypothetischen Funksignal ist sozusagen insbesondere eins zu verstehen, dessen Ausbreitung mathematisch untersucht wird, dass aber nicht real gesendet wird. So kann die Ausbreitung eines Signals näherungsweise mathematisch berechnet werden. Unter korrelieren ist insbesondere zu verstehen, dass eine, insbesondere vorbestimmte, Abweichung nicht überschritten wird und/oder dass eine Übereinstimmung gegeben ist.

So können beispielsweise verschiedene Kandidaten für die möglichen Ausgangspositionen getestet werden oder kann eine Analyse in Bezug auf mögliche Signalpfade erfolgen. Je genau die Umgebung, insbesondere Reflexionsflächen und/oder der Raum bekannt ist, desto besser/genauer kann dies erfolgen.

Die mindestens eine mögliche Ausgangsposition kann dann als mögliche Position des ersten Objekts angenommen werden.

Die mindestens eine mögliche Ausgangsposition kann zum Beispiel ein einzelner Punkt, eine Menge von einzelnen Punkten, eine Punktewolke und/oder mehrere Punktewolken sein. Dabei können Punkten oder Wolken auch Wahrscheinlichkeiten oder Wahrscheinlichkeitsverteilungen beigemessen werden. Dies ist insbesondere vorteilhaft, wenn die Ergebnisse mit Ergebnissen anderer Verfahren abgeglichen und/oder korreliert werden sollen.

In dem erfindungsgemäßen Verfahren kann für jeden der ermittelten Signalanteile eine Signalpfadlänge ermittelt werden, wobei die Signalpfadlänge insbesondere der Länge des Pfads des Signals zwischen dem zweiten Objekt und dem ersten Objekt entspricht. Es wird somit je Empfänger und/oder je Sender mindestens eine Signalpfadlänge, bevorzugt mehr, insbesondere mindestens zwei, zumindest bezüglich mindestens eines Empfängers ermittelt.

Beispielsweise kann für eine Mehrzahl von Kandidaten für möglicher Ausgangspositionen, beispielsweise die Punkte eines Gitters, bestimmt werden, ob Signalpfadlängen von Signalpfaden der Propagation eines ausgesendeten hypothetischen Funksignals von dem jeweiligen Kandidaten zum zweiten Objekt mit den der mindestens zwei ermittelten Signalpfaden korrelieren. Dabei wird insbesondere bei einer eine, insbesondere vorbestimmte, Korrelation übersteigenden Korrelation, der jeweilige Kandidat als eine mögliche Position des ersten Objekts angenommen.

Dabei können die Signalpfadlängen einer oder aller Signalpfade bestimmt werden. Die Auswahl kann dabei anhand verschiedener Kriterien und/oder Begrenzungen erfolgen, wie beispielsweise Anzahl und/oder Winkel der Reflexionen. Aber auch Kenntnisse bzgl. der Umgebung können hier weitere sinnvolle Einschränkung liefern. Beispielsweise können Punkte hinter einer für das mindestens eine Funksignal weitgehend undurchlässigen Struktur ohne entsprechen Reflexionsflächen zur Etablierung eines indirekten Signalpfads ausgeschlossen werden. Auch ist es denkbar, Einfallsrichtungen des mindestens einen Funksignals am Empfänger zu bestimmten und dadurch manche Signalpfade auszuschließen.

Mit besonderem Vorteil sind die möglichen Ausgangspositionen und/oder Kandidaten Punkte auf einem Raster, also insbesondere die Punkte, die als Ausgangsposition in Betracht gezogen werden. Dies erleichtert eine numerische Durchführung des Verfahrens.

Besonders bevorzugt werden als Kandidaten für die mindestens eine mögliche Ausgangsposition solche Punkte verwendet werden, die in einem Kreis um den Empfänger, eine Kugel um den Empfänger und/oder in einem Kreisring und/oder einem Kugelring um den Empfänger liegen, insbesondere mit einem äußeren oder in dem Ring liegenden Radius mit der kürzesten der mindestens zwei Signalpfadlängen. Das erste Objekt kann nicht weiter vom Empfänger entfernt sein, als die kürzeste aus dem mindestens einen Funksignal ableitbare Signalpfadlänge. Somit kann der Empfänger nicht weiter entfernt angeordnet sein, gegebenenfalls nach Hinzunahme einer Unsicherheit auf Grund von Messungenauigkeiten. Dadurch kann die Suche auf einen Kreis (bei zweidimensionaler Betrachtung) oder eine Kugel beschränkt werden. Nimmt man zudem an, dass man immer auch einen direkten oder LOS Signalpfad (also ohne Reflexion) erkannt oder zumindest einen, der nicht um mehr als einen vorbestimmten Faktor größer ist als der des direkten Signalpfads, kann man die Suche auf einen Kreis- oder Kugelring oder sogar auf einen Kreisumfang oder eine Kugeloberfläche einschränken.

Für jede der mindestens zwei ermittelten Signalpfadlängen kann mindestens eine mögliche Ausgangsposition des Funksignals bestimmt werden. Die mindestens eine mögliche Ausgansposition des Funksignals kann vorzugsweise, insbesondere als eine erste mögliche Ausgangsposition, eine Reflexion und, insbesondere als eine zweite mögliche Ausgangsposition, keine Reflexion des empfangenen Signals berücksichtigen. So kann eine erste mögliche Ausgangsposition unter Annahme keiner Reflexion/eines LOS-Signalpfads und eine zweite mögliche Ausgangsposition unter Annahme einer Reflexion des Signals bestimmt werden. Ferner kann die mögliche Ausgansposition auch einen Bereich oder mehrere mögliche Ausgangspositionen beinhalten, der bzw. die mathematische Unsicherheiten und/oder unterschiedliche Winkel an Reflexionsflächen und/oder unterschiedliche Punkte der Reflexion und/oder unterschiedliche Reflexionsflächen berücksichtigen.

Dabei bilden die möglichen Ausgangspositionen einer Signalpfadlänge insbesondere jeweils eine Lagenschar. Durch eine Lagenschar, die beispielsweise eine mehrere Linien und/oder einen oder mehrere Bereiche darstellt, können somit insbesondere eine Mehrzahl möglicher Positionen des Objekts, dessen Position zu bestimmenen ist, dargestellt werden. Es werden somit insbesondere mindestens zwei Lagenscharen gebildet.

Erfindungsgemäß kann eine Schnittmenge der Lagenscharen, also insbesondere eine Anhäufung von möglichen Ausgangspositionen der jeweiligen Lagenscharen in einem Ort, einer Position, einer Lage oder einem Bereich, als eine Position oder, insbesondere sofern, insbesondere mathematisch, keine eindeutige Lösung möglich ist und/oder sofern die Schnittmenge mehrere Schnittpunkte umfasst, mehrere mögliche Positionen des Objekts verwendet werden, dessen Position zu bestimmen ist, insbesondere des ersten Objekts oder des zweiten Objekts.

Bei der Bildung der Schnittpunkte kann auch eine gewisse Unschärfe oder Ungenauigkeit berücksichtigt werden, sodass nahezu Schnitte, mit einem Abstand innerhalb einer vorbestimmten, aus Messwerten und/oder Wahrscheinlichkeiten bestimmten Toleranzen als Schnittpunkte betrachtet werden.

Die Lagenscharen können auch Wahrscheinlichkeiten zu den einzelnen Lagen beinhalten, die beispielsweise aus Signalteilenergien, Reflexionshäufigkeiten, abgeleitet sein können, beinhalten. Bei der Ermittlung der Schnittpunkte der Lagenscharen könne dann aus den Wahrscheinlichkeiten der Lagen und ggf. jeweils benachbarter Lagen Wahrscheinlichkeiten für die Schnittpunkte und damit Positionen bestimmt werden.

Es werden somit beispielsweise je Empfänger und/oder Sender ausgehend von den Signalanteilen und den hieraus ermittelten Signalpfaden und den damit assoziierbar möglichen Ausgangspositionen mehrere Scharen möglicher Lagen gebildet. Beispielsweise werden dabei zwar auch Ausgangspositionen und Lagenscharen gebildet, die nicht mit der wirklichen Position des, insbesondere ersten oder zweiten, Objekts übereinstimmen. So kann es sein, dass aus einem Signalanteil unter Annahme eines LOS-Signals eine mögliche Ausgangsposition bestimmt wird, wobei der Signalanteil jedoch einem Nicht-LOS-Signal, also einem Signal, das reflektiert wurde, zugeordnet werden müsste. Gleichwohl wird beispielsweise aus dem Signalanteil auch eine Lagenschar unter einer solchen Annahme gebildet. In der Regel genügt es dabei, wenn die Signalanteile der mindestens zwei Signalpfade und hieraus letztendlich mindestens zwei Lagenscharen gebildet werden. Durch den Vergleich dieser untereinander und einer Bestimmung der Schnittmenge dieser ist es in der Regel möglich, die, zumindest die 2D, Position des Objekts zu bestimmen, zumindest näherungsweise.

Durch die Ermittlung der mindestens zwei Signalpfadlängen je Empfänger und/oder Sender, der Bildung je einer Lagenschar hieraus und der Verwendung dieser Lagenscharen lässt sich effizient und wahlweise ohne weitere Empfänger und/oder Sender die Position des Senders oder Empfängers besonders einfach bestimmen.

Mit Vorteil kann für jede der mindestens zwei ermittelten Signalpfadlängen je mindestens ein die jeweilige Signalpfadlänge wiederspiegelnder Signalpfad ermittelt werden. Weiter bevorzugt können zu jeder der mindestens zwei ermittelten Signalpfadlängen alle auf Grund der Reflexionsflächen möglichen Signalpfade ermittelt werden. Mit Vorteil kann zu jedem der Signalpfade mindestens eine mögliche Ausgangsposition des Signals bestimmt werden.

So kann beispielsweise für jede der mindestens zwei ermittelten Signalpfadlängen ein erster Signalpfad, der die Signallaufzeit des empfangen Signals wiederspiegelt, der keine Reflexion des empfangenen Signals an einer der Reflexionsflächen erfahren hat, ein zweiter Signalpfad, der die Signallaufzeit des empfangen Signals wiederspiegelt, der eine Reflexion des empfangenen Signals an einer der Reflexionsflächen erfahren hat, und ein dritter Signalpfad, der die Signallaufzeit des empfangen Signals wiederspiegelt, der zwei Reflexionen des empfangenen Signals an den Reflexionsflächen erfahren hat, ermittelt werden.

Bevorzugt, insbesondere beim Arbeit auf hohen Frequenzen, also insbesondere über 1 GHz wird es je nach Ausgestaltung und insbesondere verfügbarer Hardware und/oder Genauigkeit der Zeitsynchronisation, dass das Funksignal mindestens ein Frequenzpaar, also mindestens zwei Frequenzen, mit jeweils einer Frequenzdifferenz zwischen den Frequenzen des Paares beinhaltet und mindestens eine Änderung der Phasenveränderung zwischen den mindestens zwei Frequenzen eines Frequenzpaares bestimmt wird und Signalanteile von mindestens zwei Signalpfaden ermittelt werden. Dazu können die auf den beiden Frequenzen des Paares gemessene Phasenverschiebungen, insbesondere signalzeitaufgelöst, voneinander subtrahiert werden. Unter signalzeitaufgelöst ist dabei eine Auflösung auf Basis einer Zeitrechnung z.B. ab dem Beginn des Funksignals z.B. am Empfänger zu verstehen. Werden die Frequenzen beispielsweise nacheinander im Signal abgestrahlt, müssen die Empfangszeiten mit den verschobenen Sendezeiten korrigiert werden. Wird beispielsweise auf beiden Frequenzen die kanal- oder übertragungsbedingte Phasenverschiebung (Phi) in Abhängigkeit von der Signalzeit (ts) des Funksignals zwischen Sender und Empfänger erfasst, beispielsweise als Datenmenge Phi(ts,f), können diese subtrahiert werden, beispielsweise als Phi(ts,f1) - Phi(ts,f2) = Phi(ts, f1-f2). Aus Phi(ts,f1-f2) und gegebenenfalls weiteren dieser können dann Signalanteile bestimmt werden. Dazu kann, beispielsweise um komplexe Rechenverfahren zu nutzen, auch die Amplitude (A) oder Signalenergie (E) genutzt werden. Diese kann beispielsweise zwischen den Amplituden bei f1 und f2 signalzeitaufgelöst gemittelt werden, also beispielsweise mittels A(ts, f1-f2) = (A(ts,f1) + A(ts, f2))/2 oder E(ts, f1-f2) = (E(ts,f1) + E(ts, f2))/2.

Diese Vorgehensweise ermöglicht es, bei einer virtuellen Frequenz, die durch die Frequenzdifferenz gegeben ist, zu arbeiten, was die Anforderungen an die Messungen deutlich verringert. So kann beispielsweise im Bluetooth-Band mit dem Frequenzpaar f2 = 2,40 und f1 = 2,48 GHz und somit mit einer virtuellen Frequenz von 80 MHz gearbeitet werden. Zudem vermeidet es Probleme durch Phasensprünge bei der Reflexion, insbesondere wenn die Frequenzdifferenz nicht zu groß ist, da die Phasensprünge sich dann in der Regel bei den Frequenzen eines Paares gleich verhalten. Durch die Messung auf unterschiedlichen Frequenzen, deren Abstand insbesondere im Bereich von 50 - 500 MHz, gewählt wird, kann eine besonders fehlertolerante Bestimmung erfolgen, die auch recht zuverlässige die Mehrdeutigkeitsproblematik vermeiden kann, weil sozusagen virtuell eine Messung nur bei der Differenzfrequenz erfolgt. Erfolgt die Messung beispielsweise im 2,4GHz Band mit den Frequenzen 2400 und 2480 MHz beträgt die Differenz nur 80 MHz. Dann entsprechen 12ns 360° Phasendrehung, sodass bei einer Genauigkeit der Phasenmessung im Bereich von +/-3 bis 6° eine recht gute Auflösung erreicht werden kann und dies bei nur geringen Anforderungen in Bezug auf die Vermeidung von Mehrdeutigkeitsproblemen bzgl. der Phasenlage. Durch die Verwendung unterschiedlicher Frequenzdifferenzen kann somit auf einfachem Wege eine hohe Genauigkeit erreicht werden.

Aus einer Mehrzahl von Frequenzen kann eine Vielzahl von Frequenzpaaren und Frequenzdifferenzen gebildet werden.

Mit Vorteil beinhaltet das Funksignal mindestens ein Frequenzpaar, insbesondere mehrere, mit jeweils einer Frequenzdifferenz zwischen den Frequenzen des Paares und es werden Änderungen der Phasenveränderung zwischen den mindestens zwei Frequenzen eines Frequenzpaares bestimmt und es werden aus den Änderungen die Signalanteile von den mindestens zwei Signalpfaden ermittelt.

Mit Vorteil kann die mindestens eine Frequenz eine Mehrzahl von Frequenzen umfassen. Mit Vorteil kann die mindestens eine Frequenz mindestens fünf und/oder maximal 200 Frequenzen umfassen.

Das mindestens eine Funksignal kann unterschiedliche Frequenzen zeitgleich und/oder nacheinander beinhalten.

Mit Vorteil kann der Frequenzabstand zwischen zwei aufeinander folgenden der Mehrzahl von Frequenzen und/oder kann der Frequenzabstand zwischen zwei benachbarten der Mehrzahl von Frequenzen mindestens 0,1 MHz und/oder maximal 100 MHz, insbesondere maximal 10 MHz, betragen.

Mit Vorteil können die, insbesondere Mehrzahl oder mehreren, Frequenzen ein Frequenzband von mindestens zwei MHz und/oder maximal 100 MHz überspannen.

Mit Vorteil ist eine Vielzahl zweiter Objekte vorhanden und eingerichtet und insbesondere konfiguriert, jeweils das mindestens eine Funksignal, das insbesondere von dem mindestens einen ersten Objekt gesendet wird, zu empfangen. Mit Vorteil ist eine Vielzahl erster Objekte vorhanden und eingerichtet und insbesondere konfiguriert, jeweils mindestens ein Funksignal auszusenden und ist der mindestens eine Empfänger eingerichtet, die Funksignale, zu empfangen. Mit Vorteil können je zweitem Objekt der Vielzahl der zweiten Objekte und/oder aus jedem der am jeweiligen zweiten Objekt empfangenen Signal die Signalanteile von mindestens einem Signalpfad je des an dem jeweiligen zweiten Objekt empfangenen Signals ermittelt, insbesondere bezüglich mindestens einem zweiten Objekt mindestens zwei Signalpfade. Insbesondere wird jeweils dieselbe Frequenz, also insbesondere dieselbe Frequenz des am jeweiligen zweiten Objekt empfangenen Signals, verwendet. Mit Vorteil kann für jeden der vorgenannten ermittelten Signalanteile je eine Signalpfadlänge zwischen dem jeweiligen zweiten Objekt und dem ersten Objekt und beispielsweise jeweils eine Lagenschar ermittelt werden. Mit Vorteil kann als eine mögliche Position des ersten Objekts die Schnittmenge der Lagenscharen, die jeweils auf den an den zweiten Objekten empfangenen Signalen basieren, verwendet werden.

Mit Vorteil ist eine Vielzahl zweiter Objekte vorhanden und eingerichtet und insbesondere konfiguriert, mindestens ein Funksignal auszusenden und ist das erste Objekt eingerichtet, diese zu empfangen. Mit Vorteil können je zweiten Objekt der Vielzahl der zweiten Objekte und/oder aus jedem der vom jeweiligen zweiten Objekt empfangenen Signal die Signalanteile von mindestens einem Signalpfad von dem jeweiligen zweiten Objekt gesendeten Signals ermittelt werden, insbesondere bezüglich mindestens eines zweiten Objekt mindestens zwei Signalpfade. Insbesondere wird jeweils dieselbe Frequenz, also insbesondere dieselbe Frequenz des vom jeweiligen zweiten Objekt gesendeten Signals, verwendet. Mit Vorteil kann für jeden der vorgenannten ermittelten Signalanteile je eine Signalpfadlänge zwischen dem jeweiligen zweiten Objekt und dem ersten Objekt und beispielsweise jeweils eine Lagenschar ermittelt werden. Mit Vorteil kann als eine mögliche Position des ersten Objekts die Schnittmenge der Lagenscharen, die jeweils auf den von den zweiten Objekten empfangenen Signalen basieren, verwendet werden.

Die Aufgabe wird auch gelöst durch ein System aus mindestens einem ersten Objekt, mindestens einem zweiten Objekt und mindestens einer mit mindestens einem der ersten und/oder zweiten Objekte in Verbindung stehenden Recheneinheit zur Durchführung der Berechnungen, insbesondere Bestimmung der Signalpfade, Signalpfadlängen, Lagenscharen und/oder Schnittmenge.

Mit Vorteil ist das mindestens eine erste Objekt wie hinsichtlich des erfindungsgemäßen Verfahrens eingerichtet und insbesondere konfiguriert. Insbesondere kann es sich bei dem mindestens einen ersten Objekt um einen Sender oder gar einem Transceiver handeln.

Mit Vorteil ist das mindestens eine zweite Objekt wie hinsichtlich des erfindungsgemäßen Verfahrens eingerichtet und insbesondere konfiguriert. Insbesondere kann es sich bei dem mindestens einen zweiten Objekt um einen Empfänger oder gar einem Transceiver handeln.

Mit Vorteil kann die Recheneinheit eingerichtet sein das erfindungsgemäße Verfahren auszuführen. Mit Vorteil ist der Recheneinheit die Lage entweder des mindestens einen ersten Objekts oder des mindestens einen zweiten Objekts, insbesondere in Bezug zu dem oben genannten Bezugssystem, bekannt. Mit Vorteil ist der Recheneinheit die Lage der mindestens einen Reflexionsfläche, insbesondere in Bezug zu dem oben genannten Bezugssystem, bekannt.

Weitere vorteilhafte Ausführungsformen ergeben sich exemplarisch aus der nachstehenden Beschreibung eines Ausführungsbeispiels anhand der beigefügten schematischen Figuren. Dabei zeigt:

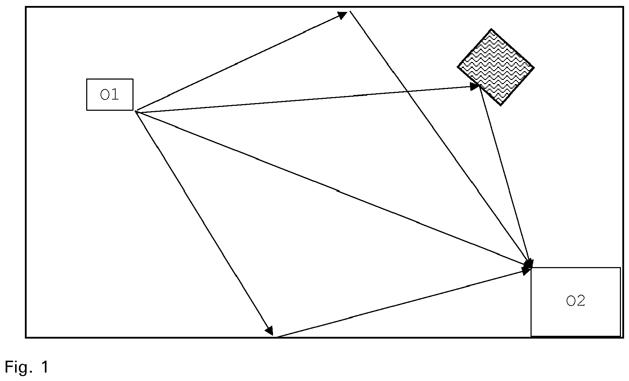

- Fig. 1: eine schematische Aufsicht auf einen Raum mit Veranschaulichung einiger Signalpfade.

Dabei werden die Ausführungsbeispiele in den Figuren skizzenhaft dargestellt, so dass einzelne Merkmale der Erfindung besonders einfach und deutlich ersichtlich sind. Die Größenverhältnisse müssen somit nicht realitätsnah dargestellt sein. In den Figuren sind gleiche Elemente mit gleichen Bezugszeichen versehen.

Figur 1 zeigt einen von vier Wänden umschlossenen Raum mit einem Sender O1 und einem Empfänger O2 und einer Säule. Veranschaulicht sind einige ausgewählte verschiedene Signalpfade unterschiedlicher Signalpfadlängen vom Sender zum Empfänger.

## Patentansprüche

1. Verfahren zur Positionsbestimmung eines in einem Raum angeordneten ersten Objekts, wobei das erste Objekt mindestens ein Funksignal sendet und wobei mindestens ein in dem Raum angeordnetes zweites Objekt, nämlich Empfänger, eingerichtet ist, das mindestens eine von dem ersten Objekt gesendete Funksignal zu empfangen, wobei das mindestens eine Funksignal mindestens eine Frequenz beinhaltet und zu jeder Zeit maximal eine Bandbreite von 50 MHz, insbesondere maximal 25 MHz, aufweist, wobei in Bezug zu dem Raum die Lage von mindestens einer das Funksignal reflektierenden und somit einen weiteren verlängerten Signalpfad erzeugenden Reflexionsfläche und die Lage des Empfängers bekannt sind und wobei aus dem empfangenen Funksignal Signalanteile ermittelt werden,
**dadurch gekennzeichnet,**
**dass** das Funksignal mindestens ein Frequenzpaar mit jeweils einer Frequenzdifferenz zwischen den Frequenzen des Paares beinhaltet und aus dem empfangenen Funksignal unter Nutzung von Phasenmessungen an dem mindestens einen Funksignal Änderungen der Phasenveränderungen zwischen den mindestens zwei Frequenzen eines Frequenzpaares bestimmt werden und aus den Änderungen Signalanteile mindestens zweier Signalpfade mit unterschiedlicher Signalpfadlänge des empfangenen Funksignals ermittelt werden und
als eine oder mehrere mögliche Position(en) des ersten Objekts mindestens eine mögliche Ausgangsposition des Funksignals bestimmt wird,
wobei die mindestens eine mögliche Ausgangsposition so bestimmt wird, dass ein von der mindestens einen möglichen Ausgangsposition ausgesendetes hypothetisches Funksignal zum zweiten Objekt über Signalpfade propagieren kann, deren Signalpfadlängen mit denen der mindestens zwei ermittelten Signalpfade korrelieren.

2. Verfahren nach dem vorstehenden Anspruch, wobei für jeden ermittelten Signalanteil eine Signalpfadlänge zwischen dem Empfänger und dem erstem Objekt ermittelt wird, wobei für jede der mindestens zwei ermittelten Signalpfadlängen mindestens eine mögliche Ausgangsposition des Funksignals bestimmt wird, wobei die möglichen Ausgangspositionen einer Signalpfadlänge jeweils eine Lagenschar bilden, wobei als eine oder mehrere mögliche Position(en) des ersten Objekts die Schnittmenge der Lagenscharen verwendet wird.

3. Verfahren nach einem der vorstehenden Ansprüche, wobei für eine Mehrzahl von Kandidaten für möglicher Ausgangspositionen bestimmt wird, ob Signalpfadlängen von Signalpfaden der Propagation eines ausgesendeten hypothetischen Funksignals von dem jeweiligen Kandidaten zum zweiten Objekt mit den der mindestens zwei Signalpfaden korrelieren.

4. Verfahren nach einem der vorstehenden Ansprüche, wobei bei einer eine, insbesondere vorbestimmte, Korrelation übersteigenden Korrelation der jeweilige Kandidat als eine mögliche Position des ersten Objekts angenommen wird.

5. Verfahren nach dem vorstehenden Anspruch, wobei die Kandidaten für möglichen Ausgangspositionen Punkte auf einem Raster sind und/oder wobei als Kandidaten für die mindestens eine mögliche Ausgangsposition solche Punkte verwendet werden, die in einem Kreis um den Empfänger, eine Kugel um den Empfänger und/oder in einem Kreisring und/oder einem Kugelring um den Empfänger liegen, insbesondere mit einem äußeren oder in dem Ring liegenden Radius mit der kürzesten der mindestens zwei Signalpfadlängen.

6. Verfahren nach einem dem vorangehenden Anspruch, wobei für jede der mindestens zwei ermittelten Signalpfadlängen je mindestens ein die jeweilige Signalpfadlänge wiederspiegelnder Signalpfad ermittelt wird, insbesondere zu jeder Signalpfadlänge, insbesondere alle, auf Grund der Reflexionsflächen mögliche(n) Signalpfade ermittelt werden, und zu jedem der Signalpfade mindestens eine mögliche Ausgangsposition des Signals bestimmt wird.

7. Verfahren nach einem der vorstehenden Ansprüche, wobei die mindestens eine Frequenz eine Mehrzahl von Frequenzen umfasst, insbesondere mindestens fünf und/oder maximal 200, der Frequenzabstand zwischen zwei aufeinander folgenden und/oder benachbarten der Mehrzahl von Frequenzen mindestens 0,1 MHz und/oder maximal 10 MHz beträgt und/oder wobei die mehreren Frequenzen ein Frequenzband von mindestens zwei MHz und/oder maximal 100 MHz überspannen.

8. Verfahren nach einem der voranstehenden Ansprüche, wobei durch Berücksichtigung mindestens einer aus dem mindestens einen Funksignal abgeleiteten Randbedingung der Rechenaufwand reduziert wird, insbesondere indem nur eine Untermenge aller möglichen Kandidaten für mögliche Ausgangspositionen berücksichtigt wird, deren Auswahl an Hand eines Vergleichs Ihrer Entfernung zum mindestens einen zweiten Objekt und der kürzesten Signalpfadlänge der Signalanteile bestimmt wird und/oder indem auf Grund der Anzahl unterschiedlicher Signalpfadlängen zu dem mindestens einen zweiten Objekt die Anzahl betrachteter Reflexionen beschränkt wird.

9. Verfahren nach einem der voranstehenden Ansprüche, wobei mehrere zweite Objekte eingerichtet sind, jeweils das mindestens eine von dem ersten Objekt gesendetes Funksignal zu empfangen, wobei aus jedem der am jeweiligen Empfänger empfangenen Funksignale unter Nutzung von Phasenmessungen an dem mindestens einen Funksignal Signalanteile mindestens eines Signalpfads des empfangenen Funksignals ermittelt wird, wobei zumindest aus dem an einem der Empfänger empfangenen mindestens einen Funksignale unter Nutzung von Phasenmessungen an dem mindestens einen Funksignal Signalanteile mindestens zweier Signalpfade mit unterschiedlicher Signalpfadlänge des empfangenen Funksignals ermittelt werden, und als eine oder mehrere mögliche Position(en) des ersten Objekts mindestens eine mögliche Ausgangsposition des Funksignals bestimmt wird, wobei die mindestens eine mögliche Ausgangsposition so bestimmt wird, dass ein von der mindestens einen möglichen Ausgangsposition ausgesendetes hypothetisches Funksignal zu den mehreren zweiten Objekten jeweils über Signalpfade propagieren kann, deren Signalpfadlängen mit denen der jeweiligen ermittelten Signalpfade korrelieren.

10. Verfahren nach dem vorstehenden Anspruch, wobei aus jedem der am jeweiligen Empfänger empfangenen Funksignale die Signalanteile von mindestens zwei Signalpfaden des jeweiligen empfangenen Funksignals ermittelt werden und für jeden dieser ermittelten Signalanteile eine Signalpfadlänge zwischen dem jeweiligen Empfänger und dem ersten Objekt ermittelt wird, wobei für jede der mindestens zwei ermittelten Signalpfadlängen je Empfänger mindestens eine mögliche Ausgangsposition des Funksignals bestimmt wird, wobei die möglichen Ausgangspositionen einer Signalpfadlänge jedes Empfängers jeweils eine Lagenschar bilden, wobei als eine oder mehrere mögliche Position(en) des ersten Objekts die Schnittmenge der Lagenscharen der Empfänger verwendet wird.

11. Verfahren nach einem der vorstehenden Ansprüche, wobei mehrere zweite Objekte eingerichtet sind, jeweils das mindestens eine von dem ersten Objekt gesendete Funksignal zu empfangen, wobei für eine Mehrzahl möglicher Ausgangspositionen bestimmt wird, ob Signalpfadlängen von Signalpfaden der Propagation eines ausgesendeten hypothetischen Funksignals von der jeweiligen Ausgangsposition zum zweiten Objekt mit denen der jeweils mindestens zwei Signalpfaden korrelieren und insbesondere bei einer eine, insbesondere vornestimmte, Korrelation übersteigenden Korrelation, die jeweilige mögliche Ausgangsposition als eine mögliche Position des ersten Objekts angenommen wird.

12. Verfahren nach einem der vorstehenden Ansprüche, wobei für die mindestens eine mögliche Position jeweils eine Wahrscheinlichkeit bestimmt wird.

## Geänderte Patentansprüche

### Geänderte Patentansprüche gemäss Regel 137(2) EPÜ.

1. Verfahren zur Positionsbestimmung eines in einem Raum angeordneten ersten Objekts (01), wobei das erste Objekt (01) mindestens ein Funksignal sendet und wobei mindestens ein in dem Raum angeordnetes zweites Objekt (O2), nämlich Empfänger, eingerichtet ist, das mindestens eine von dem ersten Objekt (01) gesendete Funksignal zu empfangen, wobei das mindestens eine Funksignal mindestens eine Frequenz beinhaltet und zu jeder Zeit maximal eine Bandbreite von 50 MHz, insbesondere maximal 25 MHz, aufweist, wobei in Bezug zu dem Raum die Lage von mindestens einer das Funksignal reflektierenden und somit einen weiteren verlängerten Signalpfad erzeugenden Reflexionsfläche und die Lage des Empfängers bekannt sind und wobei aus dem empfangenen Funksignal Signalanteile ermittelt werden und als eine oder mehrere mögliche Position(en) des ersten Objekts (01) mindestens eine mögliche Ausgangsposition des Funksignals bestimmt wird,
**dadurch gekennzeichnet,**
**dass** das Funksignal mindestens ein Frequenzpaar mit jeweils einer Frequenzdifferenz zwischen den Frequenzen des Paares beinhaltet und aus dem empfangenen Funksignal unter Nutzung von Phasenmessungen an dem mindestens einen Funksignal Änderungen der Phasenveränderungen zwischen den mindestens zwei Frequenzen eines Frequenzpaares bestimmt werden und aus den Änderungen Signalanteile mindestens zweier Signalpfade mit unterschiedlicher Signalpfadlänge des empfangenen Funksignals ermittelt werden,
wobei die mindestens eine mögliche Ausgangsposition so bestimmt wird, dass ein von der mindestens einen möglichen Ausgangsposition ausgesendetes hypothetisches Funksignal zum zweiten Objekt (O2) über Signalpfade propagieren kann, deren Signalpfadlängen mit denen der mindestens zwei ermittelten Signalpfade korrelieren.

2. Verfahren nach dem vorstehenden Anspruch, wobei für jeden ermittelten Signalanteil eine Signalpfadlänge zwischen dem Empfänger und dem erstem Objekt (O1) ermittelt wird, wobei für jede der mindestens zwei ermittelten Signalpfadlängen mindestens eine mögliche Ausgangsposition des Funksignals bestimmt wird, wobei die möglichen Ausgangspositionen einer Signalpfadlänge jeweils eine Lagenschar bilden, wobei als eine oder mehrere mögliche Position(en) des ersten Objekts (01) die Schnittmenge der Lagenscharen verwendet wird.

3. Verfahren nach einem der vorstehenden Ansprüche, wobei für eine Mehrzahl von Kandidaten für möglicher Ausgangspositionen bestimmt wird, ob Signalpfadlängen von Signalpfaden der Propagation eines ausgesendeten hypothetischen Funksignals von dem jeweiligen Kandidaten zum zweiten Objekt (O2) mit den der mindestens zwei Signalpfaden korrelieren.

4. Verfahren nach einem der vorstehenden Ansprüche, wobei bei einer eine, insbesondere vorbestimmte, Korrelation übersteigenden Korrelation der jeweilige Kandidat als eine mögliche Position des ersten Objekts (01) angenommen wird.

5. Verfahren nach dem vorstehenden Anspruch, wobei die Kandidaten für möglichen Ausgangspositionen Punkte auf einem Raster sind und/oder wobei als Kandidaten für die mindestens eine mögliche Ausgangsposition solche Punkte verwendet werden, die in einem Kreis um den Empfänger, eine Kugel um den Empfänger und/oder in einem Kreisring und/oder einem Kugelring um den Empfänger liegen, insbesondere mit einem äußeren oder in dem Ring liegenden Radius mit der kürzesten der mindestens zwei Signalpfadlängen.

6. Verfahren nach einem dem vorangehenden Anspruch, wobei für jede der mindestens zwei ermittelten Signalpfadlängen je mindestens ein die jeweilige Signalpfadlänge wiederspiegelnder Signalpfad ermittelt wird, insbesondere zu jeder Signalpfadlänge, insbesondere alle, auf Grund der Reflexionsflächen mögliche(n) Signalpfade ermittelt werden, und zu jedem der Signalpfade mindestens eine mögliche Ausgangsposition des Signals bestimmt wird.

7. Verfahren nach einem der vorstehenden Ansprüche, wobei die mindestens eine Frequenz eine Mehrzahl von Frequenzen umfasst, insbesondere mindestens fünf und/oder maximal 200, der Frequenzabstand zwischen zwei aufeinander folgenden und/oder benachbarten der Mehrzahl von Frequenzen mindestens 0,1 MHz und/oder maximal 10 MHz beträgt und/oder wobei die mehreren Frequenzen ein Frequenzband von mindestens zwei MHz und/oder maximal 100 MHz überspannen.

8. Verfahren nach einem der voranstehenden Ansprüche, wobei durch Berücksichtigung mindestens einer aus dem mindestens einen Funksignal abgeleiteten Randbedingung der Rechenaufwand reduziert wird, insbesondere indem nur eine Untermenge aller möglichen Kandidaten für mögliche Ausgangspositionen berücksichtigt wird, deren Auswahl an Hand eines Vergleichs Ihrer Entfernung zum mindestens einen zweiten Objekt (O2) und der kürzesten Signalpfadlänge der Signalanteile bestimmt wird und/oder indem auf Grund der Anzahl unterschiedlicher Signalpfadlängen zu dem mindestens einen zweiten Objekt (O2) die Anzahl betrachteter Reflexionen beschränkt wird.

9. Verfahren nach einem der voranstehenden Ansprüche, wobei mehrere zweite Objekte (O2) eingerichtet sind, jeweils das mindestens eine von dem ersten Objekt (01) gesendetes Funksignal zu empfangen, wobei aus jedem der am jeweiligen Empfänger empfangenen Funksignale unter Nutzung von Phasenmessungen an dem mindestens einen Funksignal Signalanteile mindestens eines Signalpfads des empfangenen Funksignals ermittelt wird, wobei zumindest aus dem an einem der Empfänger empfangenen mindestens einen Funksignale unter Nutzung von Phasenmessungen an dem mindestens einen Funksignal Signalanteile mindestens zweier Signalpfade mit unterschiedlicher Signalpfadlänge des empfangenen Funksignals ermittelt werden, und als eine oder mehrere mögliche Position(en) des ersten Objekts (01) mindestens eine mögliche Ausgangsposition des Funksignals bestimmt wird, wobei die mindestens eine mögliche Ausgangsposition so bestimmt wird, dass ein von der mindestens einen möglichen Ausgangsposition ausgesendetes hypothetisches Funksignal zu den mehreren zweiten Objekten (O2) jeweils über Signalpfade propagieren kann, deren Signalpfadlängen mit denen der jeweiligen ermittelten Signalpfade korrelieren.

10. Verfahren nach dem vorstehenden Anspruch, wobei aus jedem der am jeweiligen Empfänger empfangenen Funksignale die Signalanteile von mindestens zwei Signalpfaden des jeweiligen empfangenen Funksignals ermittelt werden und für jeden dieser ermittelten Signalanteile eine Signalpfadlänge zwischen dem jeweiligen Empfänger und dem ersten Objekt (O1) ermittelt wird, wobei für jede der mindestens zwei ermittelten Signalpfadlängen je Empfänger mindestens eine mögliche Ausgangsposition des Funksignals bestimmt wird, wobei die möglichen Ausgangspositionen einer Signalpfadlänge jedes Empfängers jeweils eine Lagenschar bilden, wobei als eine oder mehrere mögliche Position(en) des ersten Objekts (01) die Schnittmenge der Lagenscharen der Empfänger verwendet wird.

11. Verfahren nach einem der vorstehenden Ansprüche, wobei mehrere zweite Objekte (O2) eingerichtet sind, jeweils das mindestens eine von dem ersten Objekt (01) gesendete Funksignal zu empfangen, wobei für eine Mehrzahl möglicher Ausgangspositionen bestimmt wird, ob Signalpfadlängen von Signalpfaden der Propagation eines ausgesendeten hypothetischen Funksignals von der jeweiligen Ausgangsposition zum zweiten Objekt (O2) mit denen der jeweils mindestens zwei Signalpfaden korrelieren und insbesondere bei einer eine, insbesondere vornestimmte, Korrelation übersteigenden Korrelation, die jeweilige mögliche Ausgangsposition als eine mögliche Position des ersten Objekts (01) angenommen wird.

12. Verfahren nach einem der vorstehenden Ansprüche, wobei für die mindestens eine mögliche Position jeweils eine Wahrscheinlichkeit bestimmt wird.
